Europäisches Patentamt

European Patent Office

Office européen des brevets

(11) Publication number: **0 085 149**
**B1**

(12) **EUROPEAN PATENT SPECIFICATION**

(45) Date of publication of patent specification: **09.04.86**

(21) Application number: **82111001.2**

(22) Date of filing: **29.11.82**

(51) Int. Cl.⁴: **B 05 D 1/04,** B 05 D 1/06, B 05 B 5/00

(54) **Process and apparatus for electrostatic application of liquids or powders on substances or objects.**

(30) Priority: **02.02.82 IT 1940282**

(43) Date of publication of application:
**10.08.83 Bulletin 83/32**

(45) Publication of the grant of the patent:
**09.04.86 Bulletin 86/15**

(84) Designated Contracting States:
**AT BE CH DE FR GB IT LI LU NL SE**

(56) References cited:
**US-A-4 209 550**

(73) Proprietor: **E.D.T. Electrostatic Deposition Technologies S.p.A.**
**Corso Garibaldi 49**
**I-20121 Milano (IT)**

(73) Proprietor: **Gange, Lester**
**25 Belle Vue Lane**
**Bushey Heath Hertfordshire (GB)**

(73) Proprietor: **Pannell, Reginald James Harding**
**44 Tudor Avenue**
**Worchester Park Surrey KT4 8TX (GB)**

(72) Inventor: **Gange, Lester**
**25, Belle Vue Lane**
**Bushey Heath Hertfordshire (GB)**
Inventor: **Pannell, Reginald James Harding**
**44 Tudor Avenue**
**Worcester Park Surrey KT4 8TX (GB)**

(74) Representative: **Riccardi, Sergio et al**
**Riccardi & Co. Via Macedonio Melloni, 32**
**I-20129 Milano (IT)**

Courier Press, Leamington Spa, England.

## Description

The present invention relates to a process and an apparatus for the electrostatic application of liquids or powders on many different substances, particles and objects, with truly excellent results which cannot be obtained in any way with the presently known processes.

The invention uses the well -established principle of the electrostatic attraction between materials, whether liquid or solid, when they receive high electrical charges of opposite sign. Electrostatic charge effects have been used for a number of years in the application of paint to metal objects of a considerable size, such as washing machines, refrigerators, motorcars, or in photocopying machines.

In US—A—4 209 550 it is disclosed a method for electrostatic application of coating materials to the surface of carrier cores, in which at least one coating material is electrostatically attracted to a carrier core material and then the coated core material is heated causing the coating material to fuse and adhere to the carrier core. However, such a method is critically different from the present invention insofar as it teaches the requirement of heat to cause adhesion whereas the present invention relies upon the corona effect caused by very high voltages.

With the process and the apparatus of the present invention it is indeed possible to apply liquid or powder coating materials on many different non metallic natural, artificial or synthetic products, such as powders, pellets, tablets, seeds, grain and similar particles and substances or even objects and material of small individual size.

Starting from a method as disclosed in US—A—4 209 550, the process according to the present invention is characterized in that it comprises the steps of:

— causing the product to be electrostatically charged and coated to pass on a stationary diffusion means producing a substantially continuous circular curtain of free falling product;
— then giving to the free falling product a high positive electrical charge by passing it through a positive corona zone;
— diffusing the coating material in liquid or particle form through a centrifugal duffuser means where it is given a high electrical charge by passing it through a similar but negative corona zone, whereby the coating material is sprayed on the circular curtain of free falling product.

The apparatus according to the present invention is characterized by the fact of comprising a feeding device for the product to be coated, having at its end a stationary diffusion device producing a substantially continuous circular curtain of said product whilst in free fall on the walls of a non conductive tube, where a high voltage positive electrode is placed, producing a positive corona zone, positively charging the particles of the product to be coated; a central feeding duct for the liquid or powder coating particles, having at its end a centrifugal diffuser member provided with a high voltage negative electrode, producing a negative corona zone, negatively charging the particles of the liquid or powder coating; so that the particles of the product whilst in free fall, are totally and uniformly envelopped by the liquid or powder coating particles, which are attracted thereto because of the opposite sign of their charges.

When the product is to be coated with a liquid, the centrifugal diffuser device is a centrifugal atomiser fed by a micro pump or similar calibrated, accurate and controlled feeding device for the spray liquid.

If it is required to coat the product with a powder then the liquid centrifugal atomiser is replaced by either a powder gun fed from a fluidiser or similar powder system having a 360° diffuser horn, or cone shape fitted concentrically to the powder flow, or again using the centrifugal atomiser, but with the liquid feed system replaced by a suitable powder projection system.

The throat of the stationary diffusion device for the product to be coated may be adjusted to regulate the quantity of product to be diffused in free fall.

It is also possible to charge the powder with a friction processing device (frictional electricity) or by an electro gas dynamics system.

The process and the apparatus according to the present invention have the following considerable advantages over conventional coating methods:

1) The product to be coated does not need to be earthed, therefore non conductive materials can be used.

2) Since coating takes place in free fall it is possible to produce more continuous films than by other systems, and practically uniform and total coatings.

3) By using a curtain of product totally surrounding the delivery head for the coating liquid of powder, losses of such a spray liquid or powder are totally eliminated.

4) Unlike ordinary centrifugal coaters, this system of counter charging produces mutual directional attraction between the product to be coated and the coating spray. This then eliminates variations caused by discontinuity in the circular product curtain and is instrumental in eliminating normal coating spray losses, which can otherwise occur.

5) The operation of the plant is absolutely continuous and by linking the feed pump control for the coating spray to the product flow by means of a computer unit, a constant ratio of coating spray to product can be maintained.

This is most important in the addition of vitamins and antibiotics and in the addition of Amines to Ammonium Nitrate fertiliser pellets, which are explosive above 0.7%.

6) The electrical energy consumption is less than 200 Watts for a throughput of 200 Kgs per Minute, and therefore the system of the invention is very cost effective compared with conventional rublers and drum coaters using up to 50 Horse Power for similar outputs.

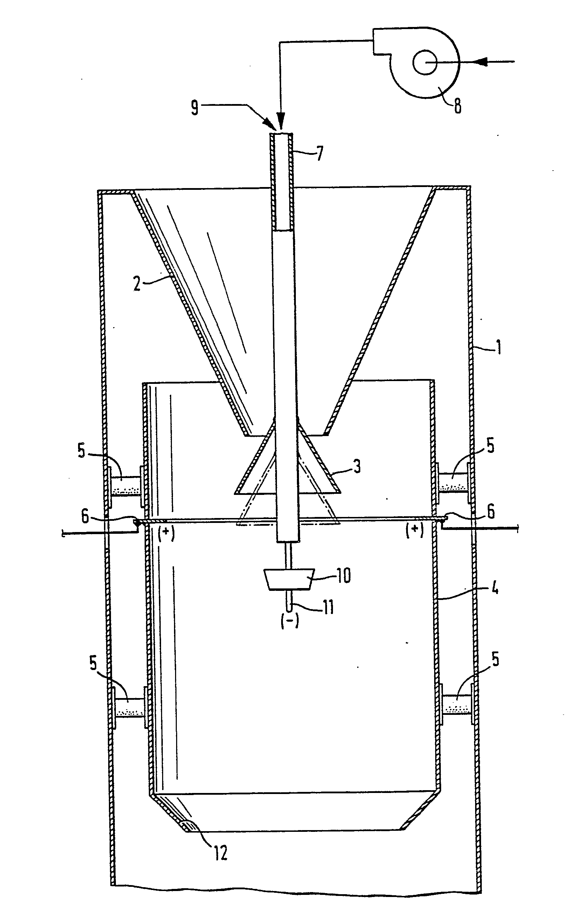

Objects, features and advantages of the invention will be apparent and clear from the following description of an embodiment of the apparatus according to the present invention, which is given as a non limiting example only with reference to the accompanying illustrative drawings, whose single figure shows said apparatus in a rather diagrammatic form.

With reference now to said single figure of the accompanying drawing, the apparatus according to the present invention substantially comprises an outer frame 1, at the top center of which a hopper 2 for the product to be coated is fixed, said product being deviated and diffused at its bottom by a stationary diffusion cone 3 so as to produce a continuous curtain of free falling product along the walls of the internal non conductive tube 4, fixed to the outer frame 1 by insulators 5. On the internal tube 4 a high voltage positive electrode 6 is arranged, producing a positive corona zone, giving to the particles of the product to be coated a high positive charge up to 90—100 kV. The polarity of the electrodes 6 and 11 may also be inverted.

At the center of the apparatus, the axis on which the stationary diffusion cone 3 is mounted, consists of a pipe 7 for feeding the coating liquid or powder, coming from a feeding pump 8, said pipe 7 being also provided with the negative power line 9. The lower end of pipe 7 is formed by the rotary atomizer head 10, spraying the liquid or powder on the curtain of product to be coated, whilst in free fall along the wall of the internal tube 4. Atomizer 10 is also provided with the high voltage negative electrode 11, producing a negative corona zone, giving to the coating liquid or powder a high negative charge, also up to 90—100 kV.

It is therefore clear that the particles of coating liquid or powder, negatively charged are attracted by the positively charged product and coat it totally and without any waste, the so coated finished product being discharged by the bottom mouth 12 of the internal tube 4 on a suitable carrying and/or discharging device (not shown), which could be for instance an endless conveyor belt or any other device, mainly designed according the kind of product to be processed.

The width of the throat or nozzle for the diffusion of the product to be coated, formed by the distance between the lower end of the hopper 2 and the wall of the stationary diffusion cone 3, may be adjusted in order to change the flow rate of product to be coated which is introduced into the processing chamber, said adjustment being diagrammatically shown in dotted lines on the drawing.

As merely illustrative and non limiting examples only, the process and the apparatus according to the present invention have been proved by the following successful experiments:

a) The addition of 0.2% of oil containing vitamins to skim mild powder at the rate of 1.5 Tonnes/Hour. Analysis on 2 gm samples showed less than 0.5% variation in vitamin content.

b) The addition of 2 Kgs per Tonne of Amine Solution to Ammonium Nitrate Fertiliser pellets of 1—2 mm diameter at the rate of 200 Kgs/Minute.

c) The addition of antifungicides and Bird Repellents to seeds producing a 30% improvement in film continuity over Non-Electrostatic Free Fall systems.

d) The addition of up to 5% fat with or without the further inclusion of antibiotics and vitamins to pig weaner pellets at a rate of 1 Tonne/Hour.

e) Addition of flavours such as Peppermint Oil and Orange Oil to sugar and to compressed sugar confectionery.

f) The addition of wetting agents to very fine powders of bulk density of 0.3 Kgs/litre as a first step in the formation of slurries.

From the foregoing it is therefore clear the great versatility of the process and the apparatus according to the present invention and the exceptional quality of the coated products so obtained, and it is to be understood that many variations, modifications, additions and/or substitutions of elements may be resorted thereto, without departing from its scope of protection, as it is defined in the appended claims.

**Claims**

1) Process for electrostatic application of coating liquid or powder materials on substances or products such as powders, pellets, tablets and grain, wherein the product to be coated is caused to fall while spraying the product with a spray of oppositely electrostatically charged coating material, whereby said coating material is electrostatically attracted to said product, characterized in that it comprises the steps of:

— causing the product to be electrostatically charged and coated to pass on a stationary diffusion means (3) producing a substantially continuous circular curtain of free falling product;

— then giving to the free falling product a high positive electrical charge by passing it through a positive corona zone;

— diffusing the coating material in liquid or particle form through a centrifugal diffuser means (10) where it is given a high electrical charge by passing it through a similar but negative corona zone, whereby the coating material is sprayed on the circular curtain of free falling product.

2) Process according to Claim 1, characterized by the fact that a constant ratio between product to be coated and coating liquid or powder material is maintained by an electronic control regulating the feed of coating liquid or powder as a function of the flow of product to be coated.

3) Apparatus for electrostatic application of coating liquid or powder materials on substances or products for carrying out the process of Claims 1 and/or 2, characterized by the fact of comprising a feeding device (2) for the product to be coated, having at its end a stationary diffusion device (3) producing a substantially continuous circular curtain of free falling product on the walls of a non conductive tube (4), where a high voltage positive electrode (6) is placed, producing a positive corona zone, positively charging the particles of the products to be coated; a central feeding duct (7) for the liquid or powder coating particles, having at its end a centrifugal diffuser member (10) provided with a high voltage negative electrode (11), producing a negative corona zone, negatively charging the particles of the liquid or powder coating; so that the particles of the free falling product are envelopped by the liquid or powder coating particles, which are attracted thereto because of the opposite sign of their charges.

4) Apparatus according to Claim 3, characterized by the fact that, when the product is to be coated with a liquid, the centrifugal diffuser device (10) is a centrifugal atomiser fed by a micro pump (8) or similar calibrated, accurate and controlled feeding device for the spray liquid.

5) Apparatus according to Claim 3, characterized by the fact that, when the product is to be coated with a powder, the centrifugal diffuser device (10), is a powder gun fed from a fluidiser or similar powder feeding system having a 360° diffuser horn.

6) Apparatus according to Claim 3, characterized by the fact that, when the product is to be coated with a powder, the centrifugal diffuser device (10) is a cone shape fitted concentrically to the powder flow.

7) Apparatus according to Claim 3, characterized by the fact that, when the product is to be coated with a powder, the centrifugal diffuser device (10) is a centrifugal atomiser provided with a suitable powder projection system.

8) Apparatus according to one or more of Claims 3—7, characterized by the fact that the throat of the stationary diffusion device (3) for the product to be coated may be adjusted to regulate the quantity of product to be diffused in free fall.

9) Apparatus according to any of Claims 5—7, characterized by the fact that the powder is electically charged by a friction processing device or by an electro gas dynamics system.

**Patentansprüche**

1. Verfahren zum elektrostatischen Auftragen von Flüssigkeiten oder Pulvern auf Stoffe oder Gegenstände, wie Pulver, Pillen, Tabletten und Körnchen, wobei das zu überziehende Produkt veranlaßt wird, während des Besprühens mit einem Sprühgut aus elektrostatisch entgegengesetzt geladenem Sprühgut herabzufallen, wodurch das Überzugsmaterial elektrostatisch zu diesem Produkt hingezogen wird, gekennzeichnet durch die Schritte:

— Veranlassen des elektrostatisch aufzuladenden und zu überziehenden Produktes zum Passieren einer ortsfesten Diffusor-Einrichtung (3), welche einen im wesentlichen ununterbrochenen kreisförmigen Schleier aus dem freifallenden Produkt erzeugt;

— sodann Versehen des freifallenden Produktes mit einer hohen positiven elektrischen Ladung durch Passierenlassen des Produktes durch eine positive Corona-Zone;

— Diffundieren des Überzugsmaterials in flüssiger oder Partikel-Form durch eine Zentrifugal-Diffusor-Einrichtung (10), in welcher dem Material durch Passierenlassen durch eine ähnliche, jedoch negative Corona-Zone eine hohe elektrische Ladung gegeben wird, wodurch das Überzugsmaterial auf den kreisförmigen Schleier de freifallenden Produktes gesprüht wird.

2. Verfahren nach Anspruch 1, dadurch gekennzeichnet, daß ein konstantes Verhältnis zwischen zu überziehendem Produkt und der Überzugsflüssigkeit oder dem pulverförmigen Material durch elektronisch gesteuertes Regeln der Zufuhr von Überzugsflüssigkeit oder—pulver als Funktion des Flusses des zu überziehenden Produktes aufrechterhalten ist.

3. Vorrichtung zum hydrostatischen Auftragen von Flüssigkeiten oder Pulvern auf Stoffe oder Gegenstände zum Durchführen des Verfahrens nach Anspruch 1 oder 2, dadurch gekennzeichnet, daß eine Zuführvorrichtung (2) für das mit einem Überzug zu versehende Produkt und endseitig eine ortsfeste Diffusor-Vorrichtung (3) vorgesehen ist, die einen im wesentlichen ununterbrochenen kreisförmigen Schleier des an den Wänden einer nicht-leitenden Röhre (4) freifallenden Produktes erzeugt, woselbst eine positive Hochspannungselektrode (6) angeordnet ist, die eine positive Corona-Zone erzeugt und welche auf Partikel des mit einem Überzug zu versehenden Produktes eine positive Ladung aufbringt; daß eine mittige Speiseleitung (7) für die flüssigen oder pulverigen Überzug-Partikel an ihrem freien Ende einen Zentrifugal-Zerstäuber-Kopf (10) trägt, der mit einer negativen Hochvolt-Elektrode (11) versehen ist und eine negative Corona-Zone erzeugt, welche die Partikel des flüssigen oder pulverigen Überzugs mit einer negativen ladung versieht, so daß die Partikel des frei fallenden Produktes von den flüssigen oder pulverigen Überzug-Partikeln eingehüllt sind, welche wegen der entgegengesetzten Vorzeichen der jeweiligen Ladungen gegenseitig angezogen werden.

4. Vorrichtung nach Anspruch 3, dadurch gekennzeichnet, daß wenn das Produkt mit einer Flüssigkeit überzogen werden soll, die Zentrifugal - Diffusor - Vorrichtung (10) als Zentrifugal - Zerstäuber ausgebildet ist, der die zu zerstäubende Flüssigkeit von einer Mikro-

Pumpe (8) oder einer ähnlichen zuverlässigen geeichten und geregelt arbeitenden Zuführvorrichtung zugeführt wird.

5. Vorrichtung nach Anspruch 3, dadurch gekennzeichnet, daß wenn das Produkt mit einem Pulver überzogen werden soll, die Zentrifugal - Diffusor - Vorrichtung (10) als Pulver-"Kanone" ausgebildet ist, welche von einem "Verflüssiger" oder einem ähnlichen Pulver-Zuführ-System gespeist wird, das ein 360°-Diffusor-Horn hat.

6. Vorrichtung nach Anspruch 3, dadurch gekennzeichnet, daß wenn das Produkt mit einem Pulver überzogen werden soll, die Zentrifugal - Diffusor - Vorrichtung (10) ein konusförmiges Gebilde ist, das konzentrisch zum Pulver-Fluß montiert ist.

7. Vorrichtung nach Anspruch 3, dadurch gekennzeichnet, daß wenn das Produkt mit einem Pulver überzogen werden soll, die Zentrifugal - Diffusor - Vorrichtung (10) ein Zentrifugal-Zerstäuber ist, der mit einem geeigneten Pulver - Projektions - System versehen ist.

8. Vorrichtung nach einem oder mehreren der Ansprüche 3 bis 7, dadurch gekennzeichnet, daß der Durchlaß der ortsfesten Diffusor - Vorrichtung (3) für das mit einem Überzug zu versehende Produkt einstellbar ist, im die Menge des im freien Fall zu diffundierenden Produktes zu regeln.

9. Vorrichtung nach einem der Ansprüche 5 bis 7, dadurch gekennzeichnet, daß das Pulver in einer Reib - Behandlungs - Vorrichtung oder mittels einem elektrodynamischen Gassystem eine elektrische Ladung erhält.

**Revendications**

1. Procédé d'application électrostatique de matières de revêtement liquides ou en poudre sur des substances ou produits tels que poudres, pastilles, paillettes et analogues, dans lequel le produit a revêtir est amené à tomber pendant qu'on le soumet à une pulvérisation avec un brouillard d'une matière de revêtement à charges électrostatiques opposées, ce qui fait que la matière de revêtement est attirée électrostatiquement sur le produit, caractérisé en ce qu'il consiste à:

— amener le produit à charger et revêtir électrostatiquement à passer sur un moyen de diffusion statique (3) produisant un rideau circulaire, sensiblement continu, de produit tombant en chute libre,
— donner ensuite au produit tombant en chute libre une forte charge électrique positive en le faisant passer à travers une zone de décharge corona positive,
— faire diffuser la matière de revêtement sous forme liquide ou particulaire par un moyen diffuseur centrifuge (10) dans lequel elle reçoit une forte charge électrique, en la faisant traverser une zone de décharge corona similaire, mais négative, ce qui fait que la matière de revêtement est pulvérisée sur le rideau circulaire de produit tombant en chute libre.

2. Procédé selon la revendication 1, K l'on maintient un rapport constant entre le produit à revêtir et la matière de revêtement liquide ou en poudre, par une commande électronique réglant le débit de matière de revêtement liquide ou en poudre en fonction du débit de produit à revêtir.

3. Appareil d'application électrostatique de matières de revêtement liquides ou en poudre sur des substances ou produits, pour mettre en oeuvre le procédé des revendications 1 et/ou 2, K en ce qu'il comprend un dispositif d'alimentation (2) de produit à revêtir, pourvu à son extrémité d'un dispositif de diffusion statique (3) produisant un rideau circulaire en substance continu de produit tombant en chute libre sur les parois d'un tube (4) non conducteur, dans lequel est placée une électrode (6) à forte tension positive, produisant une zone de décharge corona positive chargeant positivement les particules du produit à revêtir, un conduit d'alimentation central (7) pour les particules de revêtement liquide ou en poudre, pourvu à son extrémité d'un élément diffuseur centrifuge (10) muni d'une électrode à forte tension négative (11), produisant une zone de décharge corona négative, chargeant négativement les particules du revêtement liquides ou en poudre, de telle sorte que les particules du produit tombant en chute libre sont enveloppées par les particules de revêtement liquide ou en poudre attirées vers lui par le signe opposé de leurs charges.

4. Appareil selon la revendication 3, K, lorsque le produit doit être revêtu à l'aide d'un liquide, le dispositif diffuseur centrifuge (10) est un atomiseur centrifuge alimenté par une micro pompe (8) ou un dispositif d'alimentation semblable, pour brouillard liquide, étalonné, exact et commandé.

5. Appareil selon la revendication 3, K, lorsque le produit doit être revêtu à l'aide d'une poudre, le dispositif diffuseur central (10) est un canon à poudre alimenté par un système d'alimentation en poudre du type fluidificateur ou analogue, à buse de diffusion de 360°.

6. Appareil selon la revendication 3, K, lorsque le produit doit être revêtu à l'aide d'une poudre, le dispositif diffuseur centrifuge (10) est une forme conique ajustée concentriquement à l'écoulement de la poudre.

7. Appareil selon la revendication 3, K, lorsque le produit doit être revêtu à l'aide d'une poudre, le dispositif diffuseur centrifuge (10) est un atomiseur centrifuge pourvu d'un système convenable de projection de la poudre.

8. Appareil selon l'une ou plusieurs des revendications 3—7, K le goulot du dispositif de diffusion statique (3) pour le produit à revêtir peut être ajusté pour régler la quantité de produit à diffuser en chute libre.

9. Appareil selon l'une quelconque des revendications 5—7, caractérisé en ce que la poudre est chargée électriquement par un dispositif de traitement par friction ou par un système dynamique par voie électrique dans un gaz.